# EUROPÄISCHE PATENTSCHRIFT

(11) **EP 0 978 550 B1**
(45) Veröffentlichungstag und Bekanntmachung des Hinweises auf die Patenterteilung: **11.08.2004**
(21) Anmeldenummer: 99114569.9
(22) Anmeldetag: 24.07.1999
(51) Int. Cl.: C09J 5/00, C09J 199/00, C09J 103/02

(54) **Klebstoff, insbesondere Klebestift**
Adhesive, especially adhesive stick
Colle, en particulier bâton de colle

(30) Priorität: 04.08.1998 DE 19835202; 11.02.1999 DE 19905683
(43) Veröffentlichungstag der Anmeldung: 09.02.2000
(73) Patentinhaber: Artur Fischer TIP GmbH & Co. KG, 72178 Waldachtal (DE)
(72) Erfinder: Fischer, Artur, Prof. Dr. c.h. Dr. Ing. E.h., 72178 Waldachtal (DE)

(56) Entgegenhaltungen:
- WO-A-93/03109
- DE-C- 149 550
- FR-A- 2 338 980
- DATABASE WPI Week 198950 Derwent Publications Ltd., London, GB; AN 1989-368577 XP002122295 "Modified sorghum powder for adhesive paste - obtd. by adding water to peeled sorghum grains, ageing and pulverising" & JP 01 277465 A (NISSHIN FLOUR MILLING CO.), 7. November 1989 (1989-11-07)

## Beschreibung

Die Erfindung betrifft einen Klebstoff für Papier oder Pappe, insbesondere einen festen Klebstoff in Form eines Klebestifts, mit den Merkmalen des Oberbegriffs des Anspruchs 1 oder 9, der für Kinder geeignet ist.

Klebestifte, auch solche, die aus gesundheitlichen- und Umweltschutzgründen lösungsmittelfrei sind, sind an sich bekannt. Die bekannten Klebestifte haben den Nachteil, dass sie ungeeignet zum Verzehr und daher für Kinder nicht unbedenklich sind.

Aus der FR 2 338 980 ist ein Klebestift bekannt, der als klebende Substanz u.a. die Verwendung von Stärke oder ihrer Derivate vorschlägt. Um die klebende Substanz in einen festen Aggregatzustand überzuführen wird sie mit einer formgebenden Substanz, bspw. einem Wachs vermischt. Das Mischen erfolgt in flüssiger Phase bei erhöhter Temperatur. Die flüssige Masse wird in eine Form gegossen und erstarrt beim Abkühlen. In der flüssigen Phase werden der Masse Emulgatoren, Weichmacher, Lösungsmittel und sonstige Zuschlagstoffe zugefügt, die notwendig sind, damit die klebende Substanz in der formgebenden Substanz emulgiert und sich die beiden Substanzen nicht trennen, um dem Klebstoff eine gewünschte Konsistenz zu geben, ein vorzeitiges Austrocknen zu vermeiden und dgl.. Aufgrund seiner Zusammensetzung ist der bekannte Klebstoff nicht zur Verwendung durch Kinder geeignet, ein Riechen am Klebstoff, ein Ablecken des Klebstoffs oder gar eine Einnahme des Klebstoffs sind gesundheitlich bedenklich.

Ein weiterer Klebestift ist aus der WO 93/03109 bekannt, der ebenfalls Stärkederivate als klebende Substanz aufweist, die in flüssiger Phase in ein Seifengel als formgebender Substanz eingerührt sind. Auch hier werden Zuschlagstoffe zugesetzt um dem Klebestift gewünschte Eigenschaften zu geben. Auch bei diesem bekannten Klebstift bestehen Bedenken bei der Verwendung durch Kinder wegen Gesundheitsgefahren beim Riechen oder Verzehr.

Der Erfindung liegt die Aufgabe zugrunde, einen Klebstoff zum Kleben von Papier oder Pappe vorzuschlagen, der bedenkenlos durch Kinder verwendbar ist.

Diese Aufgabe wird erfindungsgemäß durch die Merkmale des Anspruchs 1 gelöst. Der erfindungsgemäße Klebstoff ist insbesondere als Klebestift durch Aufschäumen aus einem nachwachsenden Rohstoff, d. h. aus Pflanzen bzw. Agrarrohstoffen hergestellt. Der erfindungsgemäße Klebstoff eignet sich insbesondere zum Kleben von Papier oder Pappe. Zum Kleben wird der Klebstoff angefeuchtet, was beispielsweise durch Tupfen des Klebstoffs auf einen angefeuchteten Lappen oder Schwamm erfolgen kann, und anschließend durch Bestreichen des Papiers oder der Pappe mit einer angefeuchteten Stelle des Klebstoffs ein Klebstoffilm auf das Papier oder die Pappe aufgetragen. Ein weiteres Papier/ Pappe wird auf den Klebstoffilm aufgelegt und angedrückt und verklebt dauerhaft mit dem Papier oder der Pappe.

Der erfindungsgemäße Klebstoff hat den Vorteil, daß er aus einem natürlichen Rohstoff hergestellt und selbst bei seiner Einnahme gesundheitlich unbedenklich ist. Da er kein Lösungsmittel enthält, setzt er keine gesundheitlich bedenklichen Gase frei. Der erfindungsgemäße Klebstoff kann daher Kindern bedenkenlos überlassen werden.

Desweiteren ist der erfindungsgemäße Klebstoff umweltverträglich. Bei der Herstellung hat er den Vorteil einer geringen Umweltbelastung und geringen Energieverbrauchs. Bei der Entsorgung hat der erfindungsgemäße Klebstoff den Vorteil, daß er vollständig biologisch abbaubar ist, d. h. die Umwelt nicht belastet, er ist kompostierfähig.

Als Rohstoff weist der Klebstoff insbesondere Getreidekörner auf, die zu einem Getreidegries oder Getreidemehl gemahlen sind. Zur Verarbeitung wird dem Getreidegries oder Getreidemehl Wasser oder Wasserdampf zugesetzt und der Getreidegries/das Getreidemehl in einen flüssigen, zähflüssigen, teigigen oder auch festen, plastifizierbaren Zustand überführt. Aus der erhaltenen Masse wird der Klebstoff durch ein Formgebungsverfahren wie Gießen, Extrudieren, Pressen, Spritzgießen nach Art der Herstellung von Kunststoffteilen oder durch Backen erhalten. Dabei erhält der Klebstoff insbesondere eine zylindrische Form und bildet einen Klebestift. Da der Klebstoff in nicht-angefeuchtetem Zustand nicht oder allenfalls schwach klebrig ist, ist eine Umhüllung, wie sie bei bekannten Klebestiften vorhanden ist, nicht notwendig.

Vorzugsweise besteht der Klebstoff aus Mais, ist also aus zu Maisgries oder Maismehl gemahlenen Maiskörnern hergestellt. Anstelle von Mais kommen weitere Getreide wie beispielsweise Weizen, Roggen, Gerste oder Reis oder auch andere Agrarrohstoffe wie beispielsweise Kartoffelmehl oder Tapioka in Betracht. Dem Getreidegries oder Getreidemehl können Zuschlagsstoffe wie Polyvinylalkohol, Wasser, Backpulver und weitere abbaubare Aditive, wie z. B. Weichmacher wie Wasser, mehrwertige Alkohole, z. B. Ethylenglykol, Glycerin, Mannitol, Sorbitol und weitere Polyole und Polyglykole oder Derivate davon zugesetzt sein.

Der erfindungsgemäße Klebestift weist einen festen Klebstoff auf, der aus einem nachwachsenden Rohstoff, d. h. aus Pflanzen bzw. Agrarrohstoffen durch Aufschäumen wie vorstehend beschrieben hergestellt ist. Mit fest ist der Aggregatzustand des Klebstoffs gemeint. Durch das Anfeuchten erweicht der Klebstoff, so dass er sich auf das Papier oder die Pappe aufstreichen läßt. Das Erweichen hat allerdings den Nachteil, dass der Klebstoff seine Stabilität verliert, seine Handhabbarkeit wird dadurch verschlechtert. Um den Klebestift trotzdem gut handhaben zu können, weist der erfindungsgemäße Klebestift ein Rohr auf, in dem der feste Klebstoff verschiebbar einliegt. Der Klebstoff läßt sich mit einem Finger so weit in das Rohr schieben, dass er an einem Ende des Rohrs etwas übersteht und dort angefeuchtet und auf das Papier oder die Pappe aufgestrichen werden kann. Beim Aufstreichen wird der Klebestift an dem Rohr gehalten, das Rohr stabilisiert den einliegenden Klebstoff beim Aufstreichen, so dass das Aufstreichen oder ein Auftupfen problemlos möglich ist. Das Rohr ist aus einem Material hergestellt, das sich mit dem einliegenden Klebstoff nicht verbindet. Das Rohr besteht beispielsweise aus Kunststoff oder auch aus Metall und weist eine glatte Innenoberfläche auf, an der der Klebstoff, auch wenn er angefeuchtet ist, nicht haftet, so dass der Klebstoff stets im Rohr verschiebbar bleibt.

Außer der guten Handhabbarkeit hat der erfindungsgemäße Klebestift den Vorteil, dass das Rohr ein Verkleben des Klebstoffs mit Fingern vermeidet. Da Klebstoff stets neu nachgeschoben werden kann, läßt sich der Klebstoff restlos aufbrauchen. Der erfindungsgemäße Klebestift ermöglicht ein dosiertes Auftragen eines Klebstoffilms oder auch ein punktgenaues Auftupfen. Der Klebstoff bindet schnell ab, die Klebestelle härtet schnell aus und die Klebung ist nahezu sofort belastbar. Weiterer Vorteil ist, daß der Klebstoff nicht austrocknet, da er zum Kleben angefeuchtet werden muß, und daß der Klebstoff nicht altert.

Bei einer Ausgestaltung der Erfindung verjüngt sich das Rohr an seinem einen Ende. Das Rohr kann beispielsweise über seine gesamte Länge kegelstumpfförmig sein oder sich nur an seinem Ende verjüngen. Dabei ist mit Verjüngen eine abnehmende Innenweite des Rohrs gemeint, außen braucht sich das Rohr nicht zu verjüngen. Durch die Verjüngung wird der feste, vom anderen Ende in das Rohr eingeschobene Klebstoff verdichtet und dadurch stabilisiert, wodurch sich die Handhabbarkeit des Klebestifts und insbesondere die Aufstreichbarkeit des Klebstoffs verbessert. Weiterer Vorteil der Verjüngung ist, daß sie dem Verschieben des Klebstoffs im Rohr einen Widerstand entgegensetzt, wodurch sich das Nachschieben des Klebstoffs vereinfacht. Es wird vermieden, daß der Klebstoff versehentlich zu weit aus dem Rohr herausgeschoben oder ganz aus dem Rohr herausgeschoben wird.

Vorzugsweise nimmt die Wandstärke des Rohrs an einem Ende des Rohrs ab, und zwar an demselben Ende, an dem sich das Rohr ggf. verjüngt. Auch die Abnahme der Wandstärke des Rohrs an einem Ende vereinfacht das Aufstreichen eines Klebestoffilms, da der Klebestift schräg gehalten werden kann, ohne auf dem bestrichenen Material aufzusitzen.

Bei einer Ausgestaltung der Erfindung weist das Rohr zwei Schlitze oder sonstige, beispielsweise halbkreisförmige Ausnehmungen an seinem einen Ende auf, in die beispielsweise ein Holzstab zum Auftragen von Klebstoff einlegbar ist.

Die Erfindung wird nachfolgend anhand zweier in der Zeichnung dargestellter Ausführungsbeispiele näher erläutert. Es zeigen:
- Figur 1: einen erfindungsgemäßen Klebestift;
- Figuren 2 und 3: zwei Anwendungsbeispiele des erfindungsgemäßen Klebstoffs;
- Figur 4: eine Weiterbildung des erfindungsgemäßen Klebestifts im Achsschnitt; und
- Figur 5: den Klebestift aus Figur 4 in perspektivischer Darstellung.

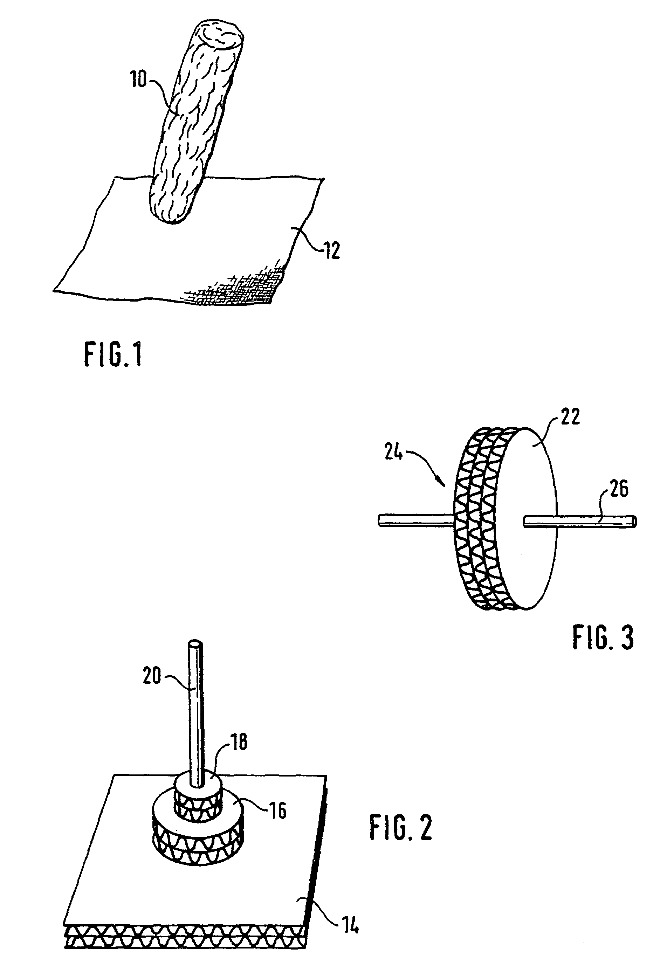

Figur 1 zeigt einen aus dem erfindungsgemäßen Klebstoff bestehenden Klebestift 10 mit der Form eines Zylinders, der zum Kleben von Papier oder Pappe vorgesehen ist. Seine Oberflächen sind etwas ballig und weisen eine runzlige Struktur auf. Der Klebestift 10 ist aus Maiskörnern hergestellt, die zu Maisgries gemahlen und, wie an sich von der Kunststoffverarbeitung her bekannt, durch Extrudieren geformt sind. Durch Beaufschlagung mit Druck und Einleitung von Wasserdampf ist der beim Extrudieren plastifizierte Mais aufgeschäumt. Andere Gase oder ein Treibmittel sind nicht erforderlich. Zur Plastifizierung kann dem Maisgries bei der Herstellung des Klebestifts 10 Wasser zugegeben werden, das zugleich als Bindemittel dient.

Der als Ausführungsbeispiel der Erfindung beschriebene Klebestift 10 weist als Bestandteile ca. 79 % Maisgries, ca. 18 % Polyvinylalkohol, ca. 2 % Wasser sowie ca. 1 % Backpulver auf. Diesen Bestandteilen können weitere abbaubare Additive zugesetzt sein, wodurch sich die Anteile der vorstehenden Bestandteile entsprechend verringern. Derartige Additive sind z. B. Weichmacher wie Wasser, mehrwertige Alkohole, z. B. Ethylenglykol, Glycerin, Mannitol, Sorbitol und weitere Polyole und Polyglykole oder Derivate davon.

Zum Kleben wird der Klebestift 10 angefeuchtet. Zum Anfeuchten kann, wie in Figur 1 dargestellt, der Klebestift 10 mit einem Stirnende auf einen feuchten oder nassen Lappen 12, Schwamm oder dgl. getupft werden. Das angefeuchtete Stirnende des Klebestifts 10 wird über ein nicht dargestelltes Papier/Pappe gestrichen, wodurch Klebstoff vom Klebestift 10 abgetragen und als Klebefilm auf das Papier/der Pappe aufgetragen wird. Ein weiteres Papier/Pappe wird anschließend auf das Papier/die Pappe mit dem Klebefilm aufgelegt und angedrückt, wodurch die beiden Papiere/Pappen (selbstverständlich auch Papier mit Pappe) miteinander verklebt werden. Beim Verkleben von Hochglanzpapier kann dessen Oberfläche vor dem Verkleben beispielsweise mit Schmirgelpapier aufgerauht werden, um die Festigkeit der Klebung zu erhöhen.

Da der erfindungsgemäße Klebstoff nicht klebrig ist, solange er nicht angefeuchtet ist, ist eine Umhüllung des Klebestifts 10 nicht erforderlich. Der Klebestift 10 wird unmittelbar angefaßt, ohne daß Klebstoff an der Haut haften bleibt.

In Figur 2 sind mit dem erfindungsgemäßen Klebestift 10 zwei Pappestücke 14 aufeinander geklebt, die eine Unterlage 14 bilden. Auf die Unterlage 14 sind zwei kreisrunde Pappescheiben 16 und auf diese zwei weitere Pappescheiben 18 kleineren Durchmessers mit dem erfindungsgemäßen Klebestift 10 geklebt. Die Pappescheiben16, 18 bilden einen Sockel für einen senkrecht stehenden Strohhalm 20, der reibschlüssig in ein Loch gesteckt ist, das durchgehend in den Pappestücken 14 und den Pappescheiben 16, 18 angebracht ist. Durch die Erhöhung der die Unterlage bildenden Pappestücke 14 um die den Sockel bildenden Pappescheiben 16, 18 hat der Strohhalm 20 einen stabilen Stand.

In Figur 3 sind drei kreisrunde Pappescheiben 22 mit dem Klebestift 10 zu einem Rad 24 zusammengeklebt. In der Mitte der Pappescheiben 22 ist ein durchgehendes Loch angebracht, durch das ein Strohhalm als Radwelle 26 gesteckt ist, auf der das Rad 24 reibungsarm drehbar ist. Aufgrund seiner Breite ist das Rad 24 stabil gegen Kippen auf der Radwelle 26 gelagert.

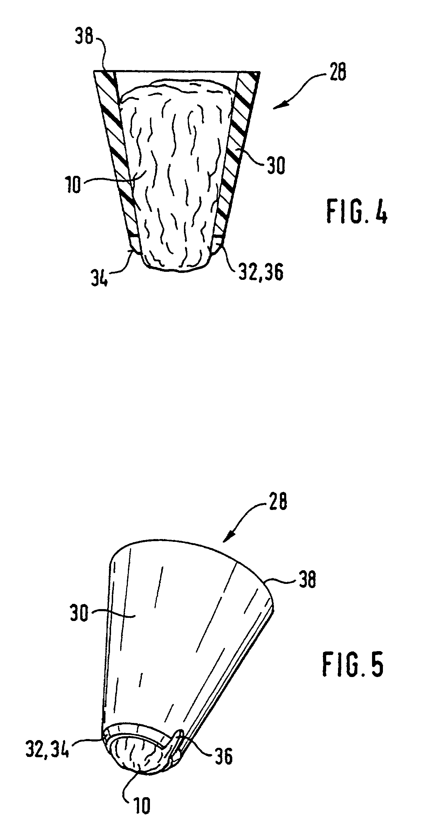

Der in Figuren 4 und 5 dargestellte, erfindungsgemäße Klebestift 28 weist als festen Klebstoff den in Figur 1 dargestellten Klebestift 10 auf, der verschiebbar in einem Rohr 30 einliegt. Mit fest ist der Aggregatzustand des Klebstoffs 10 gemeint. Das Rohr 30 hat die Form eines Kegelstumpfs, es verjüngt sich zu einem vorderen Ende 32 hin. Am vorderen Ende 32 nimmt eine Wandstärke des Rohrs 30 ab, wodurch eine Art Fase 34 ausgebildet ist. Am vorderen Ende 32 des Rohrs 30 sind einander gegenüberliegend zwei kurze Schlitze 36 angebracht. Das Rohr 30 besteht aus einem glattwandigen Kunststoff, das ein Verkleben mit dem Klebstoff/Klebestift 10 verhindert, so daß der Klebstoff 10 im Rohr 30 verschiebbar ist.

Der feste Klebstoff 10 hat näherungsweise die Form eines Zylinders, er eignet sich insbesondere zum Kleben von Papier oder Pappe. Der Klebstoff 10 weist eine runzlige Struktur auf.

Der feste, zylinderförmige Klebstoff 10 weist einen Durchmesser auf, der ungefähr einem Innendurchmesser des Rohrs 30 an dessen hinterem Ende 38 entspricht. Der Klebstoff 10 wird vom hinteren Ende 38 her in das Rohr 30 eingeschoben so weit, daß der Klebstoff 10 etwas aus dem vorderen Ende 32 des Rohrs 30 vorsteht. Zum Kleben wird der Klebstoff 10 an seinem aus dem vorderen Ende 32 des Rohrs 30 vorstehenden Ende angefeuchtet. Zum Anfeuchten kann der Klebestift 28 mit seinem vorderen Ende 32 auf einen feuchten oder nassen Lappen, Schwamm oder dgl. getupft werden. Das angefeuchtete Ende des Klebstoffs 10 des Klebestifts 28 wird über ein nicht dargestelltes Papier/Pappe gestrichen, wodurch Klebstoff 10 vom Klebestift 28 abgetragen und als Klebefilm auf das Papier/die Pappe aufgetragen wird. Ein weiteres Papier/Pappe wird anschließend auf das Papier/die Pappe mit dem Klebefilm aufgelegt und angedrückt, wodurch die beiden Papiere/Pappen (selbstverständlich auch Papier mit Pappe) miteinander verklebt werden. Beim Verkleben von Hochglanzpapier kann dessen Oberfläche vor dem Verkleben beispielsweise mit Schmirgelpapier aufgerauht werden, um die Festigkeit der Klebung zu erhöhen.

Beim Aufstreichen des Klebstoffs 10 hält das Rohr 30 den Klebstoff 10 stabil, auch wenn dieser durch das Anfeuchten aufgeweicht ist.

Die beiden Schlitze 36 im vorderen Ende 32 des Rohrs 30 dienen zum Auftragen von Klebstoff 10 auf beispielsweise einen Holzstab. Der Klebstoff 10 wird wie angegeben am vorderen Ende 32 angefeuchtet und anschließend wird der nicht dargestellte Holzstab in die beiden Schlitze 36 hineingedrückt und gedreht, wobei der Klebstoff 10 vom hinteren Ende 38 her mit einem Finger nachgedrückt wird.

Ist der Klebstoff 10 soweit abgetragen, daß er bündig mit dem vorderen Ende 32 des Rohrs 30 ist, wird er durch Nachdrücken mit einem Finger vom hinteren Ende 38 her wieder ein Stück aus dem vorderen Ende 32 des Rohrs 30 herausgedrückt. Da der Klebstoff 10 am hinteren Ende 38 trocken ist, ist er dort nicht klebrig und verklebt nicht mit dem nachdrückenden Finger. Durch Einschieben eines nicht dargestellten, weiteren Stücks festen Klebstoffs 10 läßt sich der Klebstoff 10 vollständig aufbrauchen.

## Patentansprüche

1. Klebstoff, **dadurch gekennzeichnet, dass** der Klebstoff einen festen, aus einem nachwachsenden Rohstoff bestehenden Schaum aufweist.

2. Klebstoff nach Anspruch 1, **dadurch gekennzeichnet, dass** der Klebstoff ein Klebestift (10) ist.

3. Klebstoff nach Anspruch 1, **dadurch gekennzeichnet, dass** der Rohstoff ein Getreide ist.

4. Klebstoff nach Anspruch 3, **dadurch gekennzeichnet, dass** der Klebstoff aus einem Getreidegries oder Getreidemehl durch Gießen, Extrudieren, Pressen, Spritzgießen oder Backen hergestellt ist.

5. Klebstoff nach Anspruch 4, **dadurch gekennzeichnet, dass** der Klebstoff aus Maisgries oder Maismehl hergestellt ist.

6. Klebstoff nach Anspruch 3, **dadurch gekennzeichnet, dass** dem Getreide als Hauptbestandteil Polyvinylalkohol und ferner Wasser sowie Backpulver als weitere Bestandteile zugesetzt sind.

7. Klebstoff nach Anspruch 6, **dadurch gekennzeichnet, dass** der Klebstoff aus Getreidegries oder Getreidemehl mit einem Anteil von ca. 79 %, Polyvinylalkohol mit einem Anteil von ca. 18 %, Wasser mit einem Anteil von ca. 2 % und Backpulver mit einem Anteil von ca. 1 % hergestellt ist.

8. Klebstoff nach Anspruch 7, **dadurch gekennzeichnet, dass** den Bestandteilen abbaubare Additive als Weichmacher in Form von Wasser, mehrwertigen Alkoholen, Ethylenglykol, Glycerin, Mannitol, Sorbitol und/oder weitere Polyole oder Polyglykole oder Derivate davon zugesetzt sind.

9. Klebestift, mit einem Klebstoff nach einem der Ansprüche 1 bis 8, wobei der Klebstoff ein fester Klebstoff ist, **dadurch gekennzeichnet, dass** der Klebstoff (10) verschiebbar in einem Rohr (30) aufgenommen ist.

10. Klebestift nach Anspruch 9, **dadurch gekennzeichnet, dass** sich das Rohr (30) zumindest an einem Ende (32) verjüngt.

11. Klebestift nach Anspruch 9, **dadurch gekennzeichnet, dass** eine Wandstärke des Rohrs (30) an einem Ende (32) des Rohrs (30) abnimmt.

12. Klebestift nach Anspruch 9, **dadurch gekennzeichnet, dass** das Rohr (30) zwei auf einer Geraden angeordnete Schlitze (36) an einem Ende (32) aufweist.

13. Verfahren zum Verkleben von Papier und/oder Pappe, **dadurch gekennzeichnet, dass** ein Klebstoff nach einem der vorhergehenden Ansprüche angefeuchtet, anschließend als Klebstoffilm auf das Papier/die Pappe aufgetragen und ein weiteres Papier/Pappe aufgelegt wird.

## Claims

1. Adhesive, **characterized in that** the adhesive has a solid foam consisting of a renewable raw material.

2. Adhesive according to claim 1, **characterized in that** the adhesive is a glue stick (10).

3. Adhesive according to claim 1, **characterized in that** the raw material is a cereal.

4. Adhesive according to claim 3, **characterized in that** the adhesive is produced from cereal granules or cereal powder by casting, extrusion, compression moulding, injection moulding or baking.

5. Adhesive according to claim 4, **characterized in that** the adhesive is produced from maize granules or maize powder.

6. Adhesive according to claim 3, **characterized in that** to the cereal as main constituent there are added polyvinyl alcohol and also water as well as baking powder as further constituents.

7. Adhesive according to claim 6, **characterized in that** the adhesive is produced from cereal granules or cereal powder with a content of about 79 %, polyvinyl alcohol with a content of about 18 %, water with a content of about 2 % and baking powder with a content of about 1 %.

8. Adhesive according to claim 7, **characterized in that** to the constituents there are added degradable additives as plasticisers in the form of water, polyhydric alcohols, ethylene glycol, glycerol, mannitol, sorbitol and/or further polyols or polyglycols or derivatives thereof.

9. Glue stick having an adhesive according to any one of claims 1 to 8, wherein the adhesive is a solid adhesive, **characterized in that** the adhesive (10) is housed displaceably in a tube (30).

10. Glue stick according to claim 9, **characterized in that** the tube (30) tapers at least at one end (32).

11. Glue stick according to claim 9, **characterized in that** the wall thickness of the tube (30) decreases at one end (32) of the tube (30).

12. Glue stick according to claim 9, **characterized in that** the tube (30) has two slots (36) arranged in a straight line at one end (32).

13. Method of glueing paper and/or cardboard, **characterized in that** an adhesive according to any one of the preceding claims is moistened, then applied to the paper/cardboard in the form of an adhesive film and a further piece of paper/cardboard is laid on top.

## Revendications

1. Colle, **caractérisée en ce que** la colle présente une mousse solide issue d'une matière première qui repousse.

2. Colle selon la revendication 1, **caractérisée en ce que** la colle est un bâton de colle (10).

3. Colle selon la revendication 1, **caractérisée en ce que** la matière première est une céréale.

4. Colle selon la revendication 3, **caractérisée en ce que** la colle est fabriquée à partir d'un gruau de céréales ou d'une farine de céréales, par coulée, extrusion, moulage sous pression, moulage par injection, cuisson ou agglomération.

5. Colle selon la revendication 4, **caractérisée en ce que** la colle est fabriquée à partir d'un gruau de maïs ou d'une farine de maïs.

6. Colle selon la revendication 3, **caractérisée en ce que** l'on ajoute à la céréale en tant que principal constituant de l'alcool de polyvinyle, de l'eau et de la levure chimique comme constituants supplémentaires.

7. Colle selon la revendication 6, **caractérisée en ce que** la colle est constituée d'environ 79 % de gruau de céréales ou de farine de céréales, d'environ 18 % d'alcool de polyvinyle, d'environ 2 % d'eau et d'environ 1 % de levure chimique.

8. Colle selon la revendication 7, **caractérisée en ce que** des additifs dégradables sont ajoutés aux ingrédients, en tant que plastifiants sous forme d'eau, d'alcools polyvalents, d'éthylèneglycol, de glycérine, de mannitol, de sorbitol et/ou d'autres polyols et polyglycols ou dérivés de ceux-ci.

9. Bâton de colle avec une colle selon l'une des revendications 1 à 8, la colle étant une colle solide, **caractérisé en ce que** la colle (10) est insérée dans un tube (30) dans lequel elle peut être déplacée ou glisser.

10. Bâton de colle selon la revendication 9, **caractérisé en ce que** le tube (30) s'effile au moins en une extrémité (32).

11. Bâton de colle selon la revendication 9, **caractérisé en ce que** l'épaisseur de paroi du tube (30) se réduit en une extrémité (32) du tube (30).

12. Bâton de colle selon la revendication 9, **caractérisé en ce que** le tube (30) comporte deux fentes (36) alignées sur une droite en une extrémité (32).

13. Procédé d'encollage de papier et/ou de carton, **caractérisé en ce qu'**une colle selon l'une quelconque des revendications précédentes est humidifiée, puis déposée sous la forme d'un film adhésif sur le papier et/ou le carton, et **en ce qu'**un autre papier ou carton est placé par dessus.
